# EUROPEAN PATENT SPECIFICATION

(11) **EP 0 606 287 B1**
(45) Date of publication and mention of the grant of the patent: **24.02.1999**
(21) Application number: 92920099.6
(22) Date of filing: 23.09.1992
(51) Int. Cl.: H04N 7/16

(54) **METHOD FOR CUSTOMIZING A DEVICE WITH A SMART CARD**
VERFAHREN ZUR INDIVIDUELLEN ANPASSUNG EINES GERÄTES MIT EINER CHIPKARTE
PROCEDE PERMETTANT DE PERSONNALISER UN DISPOSITIF A CARTES INTELLIGENTES

(30) Priority: 03.10.1991 WO PCT/EP91/40264
(43) Date of publication of application: 20.07.1994
(73) Proprietor: THOMSON multimedia, 92648 Boulogne Cédex (FR)
(72) Inventor: DIEHL, Eric, F-67100 Strasbourg (FR); HAMON, Joel, F-67640 Lipsheim (FR)
(74) Representative: Hartnack, Wolfgang, Dipl.-Ing.
(86) International application number: EP9202195
(87) International publication number: WO9307715

(56) References cited:
- EP-A- 0 328 440
- EP-A- 0 436 472
- ELEKTRONIK vol. 38, no. 6, 17 March 1989, MÜNCHEN pages 56 - 58 M.JÜNKE 'DIGITALES FERNSEHKONZEPT FÜR SATELLITEN-PAY-TV'
- 5.CONFERENCE AND EXHIBITION ON TELEVISION TECHNIQUES,12-14.JUNE,1990 vol. 2, BUDAPEST,HUNGARY pages 19 - 27 J.BLINEAU 'SECOND GENERATION OF CONDITIONAL ACCESS SYSTEMS FOR TELEVISION'
- 13TH INTERNATIONAL T.V.SYMPOSIUM,28.MAY-2.JUNE,1983 MONTREUX pages 1 - 10 Q.A.HOANG 'THE MEMORY CARD - ITS POSSIBLE USE TO PAY TV SATELLITE BROADCASTING'

## Description

The present invention relates to a method for customizing a device with a smart card by loading into the device reception frequencies or channels stored on that card.

### Background

New pay TV systems, e.g. the Videocrypt system, make use of smart cards which control the access to a respective decoder for de-scrambling the TV signal.
EP-A-0428252 discloses a pay TV system including a smart card which serves for decryption and message display purposes.

### Invention

It is one object of the invention to disclose a method of customization a pay TV decoder. This object is achieved by the method disclosed in claim 1.

In principle the inventive method consists in customizing a device 6 with a smart card 5, wherein a dedicated smart card is linked to a card reader 4 of said device and said device is also provided with memory means 1, 3 and with processor unit means 2 connected to said memory means and to said card reader, and wherein said dedicated smart card 5 is provided with the following functions:
- presentation of a normalized answer to a 'reset' command;
- presentation of an application identifier to said device 6;
- a procedure which transmits to said device 6 data contained in a table, said table containing different values for customization of said device 6,
and said device 6 becomes customized automatically after said dedicated smart card 5 has been inserted to said card reader 4 by transmitting data from said smart card 5 to said device 6 and storing respective data in said memory means 1.

Advantageous additional embodiments of the inventive method are resulting from the respective dependent claims.

In principle the invention utilises processor unit means 2 which are connected to memory means 1, 3 and to a card reader 4 in which a smart card 5 is inserted, wherein data stored in said smart card 5 are transmitted to said card reader 4 and respective data become stored in said memory means 1.

In order to be efficient in production, decoders have to be completely identical for the manufacturer. But each program provider would prefer specifically customized decoders. For instance, in cable networks the cable operators will use different channel allocation depending from the respective site. Currently the only solution available is that the user or more often the installer will program the decoder. This operation is fastidious and consumes a lot of time. The inventive method offers a quick and flexible solution for personalizing intelligently a pay TV decoder or respective devices. In each pay TV receiver decoder with an access control based on a smart card there are the following components:
- a non-volatile memory, typically of EEPROM type, which memorizes several parameters, especially the channels' frequencies;
- a central processor unit (CPU);
- a ROM memory containing the application software;
- a card reader which allows the CPU to read from a smart card.

Such a system is able to read any smart card responding to a predefined format. The invention uses a dedicated smart card in order to perform automatically a channel programming.

### Drawing

Preferred embodiments of the invention will now be described with reference to the accompanying drawing:

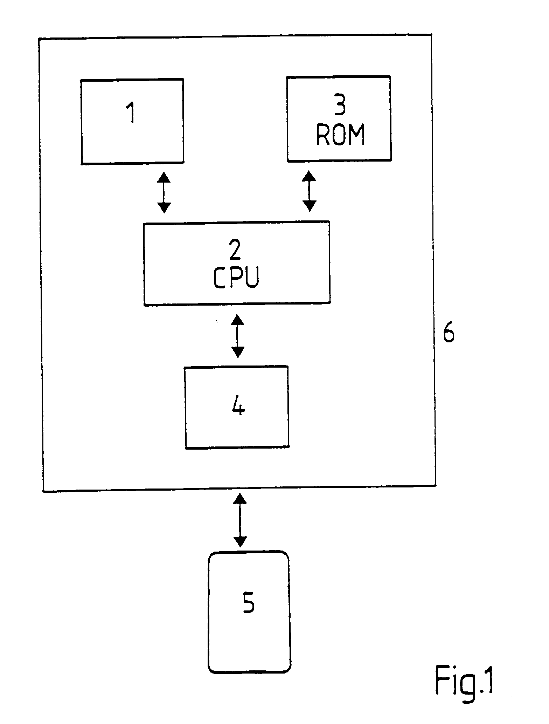

Fig. 1 shows a partial block diagram of an inventive pay TV decoder together with a smart card.

### Preferred embodiments

The smart card 5 in Fig. 1 contains (not depicted) a CPU, an interface and a memory with software which performs at least the following functions:
- presentation of a normalized answer to 'reset' (see ISO 7816-3);
- presentation of an application identifier to decoder 6;
- procedure which transmits to decoder 6 the data contained in a table, for instance by using a dedicated instruction class (see ISO 7816-3 section 8.2.1);
- table containing the different values for customization.

Pay TV decoder 6 contains a CPU 2, which is connected to a ROM 3, to an EEPROM memory 1 and to a card reader 4. Once the decoder 6 has identified the installer smart card, it will store the data received from smart card 5 inside memory 1. After this operation the receiver part of decoder 6 (not depicted) will be correctly programmed. This operation can be completely automatic and transparent or may be initiated by the installer.

Smart card 1 can be dedicated to one configuration. But if a card with larger memory is used it is possible to use the same smart card 1 for different configurations from the same program provider by changing a little bit the software stored in the smart card and in the decoder's program memory. If a procedure is added which allows to send to smart card 5 a reference, the card will be able to point to the corresponding table and down load the right one.

In case of cable networks it is possible to store in one card all the channel allocation tables for the different sites belonging to the program provider. Thereby the intervention of the installer is reduced and the programming of the channels is efficient.
If smart cards 5 with EEPROM memory are used, it advantageously is possible to change at any moment the configuration of the network without changing the smart cards. Another advantage is that decoder 6 does not need to know which form the allocation table will have. The cable operator may change very easily its parameters (like raster) between adjacent channels.
Obviously the installation time is reduced drastically.

Sometimes decoder 6 must be customized according to a customer configuration. If a video cassette recorder (VCR) is controlled from a pay TV decoder via an infra-red link as described in EP-A-91400989, decoder 6 must store infra-red codes for this connection to the VCR. This codes, too, can be down loaded by a dedicated smart card 5.
The installer may have a listing of all VCR types and a bunch of smart cards. If he has found the correct type, he inserts the right card and requests the right table to be downloaded.

This invention can also be used for customizing universal infra-red hand sets or other devices like TV's, VCR's or audio equipment. The remote control hand set can be programmed via an infra-red link between the pay TV decoder and itself.

The hand set or device, respectively, itself also may include a smart card reader and be programmed in a direct way. Therefore it is possible that different manufacturers use the same hand set which will be programmed by a specific smart card added from the respective manufacturer to the hand set.
The hand set may also be programmed by any other device, e.g. TV receiver, audio amplifier, which contains a respective card reader.
Instead of an infra-red link also other communication paths are possible, for instance temporary cable connections.

## Claims

1. Method for controlling, using a smart card (5), a pay TV decoder (6) which includes a smart card reader (4), memory means (1, 3) and processor unit means (2) connected to said memory means and to said card reader, **characterized** in that in order to customize, in particular automatically, parameters of said pay TV decoder including a table or tables concerning local channel allocation, the following steps are carried out:
- following insertion of an installer smart card (5) containing at least one frequency or channel number data table into said card reader, resetting said smart card by said pay TV decoder;
- following said reset by the pay TV decoder, automatically programming said pay TV decoder including storing data concerning reception frequencies or channel numbers from said table or tables into said memory means (1).

2. Method according to claim 1, wherein one table from said smart card (5) is selected by sending a table reference from said pay TV decoder (6) to said smart card.

3. Method according to claim 1 or 2, wherein in a VCR or receiver controlled from said pay TV decoder (6) by an infra-red link said frequencies or channel numbers are programmed automatically, too, and wherein respective IR code data are stored in said smart card (5) and transmitted via said pay TV decoder to said VCR, or receiver, using said infra-red link.

4. Method according to any of claims 1 to 3, wherein a programmable hand set is programmed by receiving respective command code through an infra-red link from said pay TV decoder (6).

5. Method according to any of claims 1 to 4, wherein said programming is performed in a menu-controlled way after said dedicated smart card (5) has been inserted into said card reader (4).

6. Method according to any of claims 3 to 5, wherein instead of said infra-red link a cable connection is used.

7. Method according to any of claims 1 to 6, wherein said smart card (5) is controlled using instructions according to the ISO 7816-3 standard.

8. Method according to any of claims 1 to 6, wherein one parameter is the raster between adjacent channels.

## Patentansprüche

1. Verfahren zum Steuern unter Verwendung einer Smart Card (5), eines Gebührenfernseh-Dekoders (6), der einen Smart Card-Leser (4) enthält, Speichermitteln (1,3) und Prozessoreinheitsmitteln (2), die mit den Speichermitteln und dem Card-Leser verbunden sind,
dadurch gekennzeichnet, daß
zur individuellen, vorzugsweise automatischen Anpassung der Parameter des Gebührenfernseh-Dekoders, der eine Tabelle oder Tabellen für die örtliche Kanalzuordnung enthält, die folgenden Schritte durchgeführt werden:
- auf die Einführung einer Einrichter-Smart Card (5), die wenigstens eine Tabelle mit Daten über eine Frequenz- oder Kanalnummer enthält, in den Card-Leser die Smart Card durch den Gebührenfernseh-Dekoder zurückgesetzt wird,
- auf das Rücksetzen durch den Gebührenfernseh-Dekoder folgt automatisch eine Programmierung des Gebührenfernseh-Dekoders einschließlich einer Speicherung von Daten, die Empfangsfrequenzen oder Kanalnummern entsprechen, von der Tabelle oder den Tabellen in die Speichermittel (1).

2. Verfahren nach Anspruch 1, wobei eine Tabelle durch Senden einer Tabellen-Referenz von dem Gebührenfernseh-Dekoder (6) zu dem Smart Card-Leser von der Smart Card (5) ausgewählt wird.

3. Verfahren nach Anspruch 1 oder 2 , wobei in einem Videorekorder oder einem Empfänger, der von dem Gebührenfernseh-Dekoder (6) über eine Infrarot-Strecke gesteuert wird, die Frequenzen oder Kanalnummern ebenfalls automatisch programmiert werden, und wobei jeweilige Daten für einen Infrarot-Kode in der Smart Card (5) gespeichert und über den Gebührenfernseh-Dekoder zu dem Videorekorder oder dem Empfänger unter Verwendung der Infrarot-Strecke übertragen werden.

4. Verfahren nach einem der Ansprüche 1 bis 3, wobei eine programmierbare Handeinheit durch Empfang eines entsprechenden Steuercodes über eine Infrarot-Strecke von dem Gebührenfernseh-Dekoder (6) programmiert wird.

5. Verfahren nach einem der Ansprüche 1 bis 4, wobei die Programmierung in einer Menü-gesteuerten Weise erfolgt, nachdem die dafür gewidmete Smart Card (5) in den Card-Leser (4) eingeführt worden ist.

6. Verfahren nach einem der Ansprüche 3 bis 5, wobei anstelle der Infrarot-Strecke eine Kabelverbindung verwendet wird.

7. Verfahren nach einem der Ansprüche 1 bis 6, wobei die Smart Card (5) unter Anwendung von Instruktionen gemäß dem Standard ISO 7816-3 gesteuert wird.

8. Verfahren nach einem der Ansprüche 1 bis 6, wobei ein Parameter das Raster zwischen aneinanderliegenden Kanälen ist.

## Revendications

1. Procédé pour commander, en utilisant une carte à puce (5), un décodeur de télévision à péage (6) qui comporte un lecteur de carte à puce (4), des moyens-mémoire (1, 3) et un processeur (2) connecté auxdits moyens-mémoire et au dit lecteur de cartes, caractérisé en ce que, afin de personnaliser, en particulier, automatiquement, des paramètres dudit décodeur de télévision à péage, comportant une ou des tables concernant l'allocation du canal local, les étapes suivantes sont réalisées :
- après l'insertion d'une carte à puce d'installateur (5) contenant au moins une table de données de fréquence ou de numéro de canal dans ledit lecteur de cartes, remise à zéro de ladite carte à puce par ledit lecteur de télévision à péage ;
- après ladite remise à zéro par le décodeur de télévision à péage, programmation automatique dudit décodeur de télévision à péage incluant le stockage de données concernant les fréquences de réception ou numéro de canaux à partir de ladite ou desdites tables dans ladite mémoire (1).

2. Procédé selon la revendication 1, dans lequel une table provenant de la carte à puce (5) est choisie en envoyant une référence de table à partir du décodeur de télévision à péage (6) vers ladite carte à puce.

3. Procédé selon la revendication 1 ou 2, dans lequel dans un VCR ou récepteur contrôlé à partir du décodeur de télévision à péage (6) par une connexion infrarouge, lesdites fréquences ou numéros de canaux sont aussi programmés automatiquement, et dans lequel des données de codes IR respectifs sont stockées dans ladite carte à puce (5) et transmises à travers le décodeur de télévision à péage au VCR, ou récepteur, en utilisant ladite connexion infrarouge.

4. Procédé selon l'une des revendications 1 à 3, dans lequel une télécommande programmable est programmée en recevant des codes de commande respectifs à travers une connexion infrarouge à partir du décodeur de télévision à péage (6).

5. Procédé selon l'une des revendications 1 à 4, dans lequel ladite programmation est effectuée de manière contrôlée par menu après qu'une carte à puce dédiée ait été insérée dans le lecteur de cartes à puce (4).

6. Procédé selon l'une des revendications 3 à 5, dans lequel à la place d'une connexion infrarouge, on utilise une connexion par câble.

7. Procédé selon l'une des revendications 1 à 6, dans lequel ladite carte à puce (5) est contrôlée en utilisant des instructions selon la norme ISO 7816-3.

8. Procédé selon l'une quelconque des revendications 1 à 6, dans lequel un paramètre est la différence de fréquence entre canaux adjacents.
